(19) Europäisches Patentamt
European Patent Office
Office européen des brevets

(11) **EP 1 250 799 B1**

(12) **EUROPEAN PATENT SPECIFICATION**

(45) Date of publication and mention
of the grant of the patent:
**27.07.2016   Bulletin 2016/30**

(51) Int Cl.:
*G06F 17/30* (2006.01)     *G11B 27/10* (2006.01)
*G11B 27/34* (2006.01)     *H04N 5/445* (2006.01)
*H04N 5/76* (2006.01)      *H04N 5/782* (2006.01)
*H04N 7/173* (2006.01)     *H04N 21/25* (2011.01)
*H04N 21/4147* (2011.01)   *H04N 21/431* (2011.01)
*H04N 21/433* (2011.01)    *H04N 21/442* (2011.01)
*H04N 21/443* (2011.01)    *H04N 21/45* (2011.01)
*H04N 21/454* (2011.01)    *H04N 21/482* (2011.01)
*H04N 21/485* (2011.01)    *H04N 21/6543* (2011.01)
*H04N 21/81* (2011.01)

(21) Application number: **00990325.3**

(22) Date of filing: **20.12.2000**

(86) International application number:
**PCT/US2000/035152**

(87) International publication number:
**WO 2001/047238 (28.06.2001 Gazette 2001/26)**

(54) **DISTRIBUTED, INTERACTIVE TELEVISION PROGRAM GUIDE; SYSTEM AND METHOD**

VERTEILTER, INTERAKTIVER FERNSEHPROGRAMMFÜHRER; SYSTEM UND VERFAHREN

GUIDE DE PROGRAMME TELEVISE INTERACTIF, DISTRIBUTE; SYSTEME ET PROCEDE

(84) Designated Contracting States:
**DE FR GB**

(30) Priority: **21.12.1999   US 171829 P**

(43) Date of publication of application:
**23.10.2002   Bulletin 2002/43**

(73) Proprietor: **TiVo, Inc.**
**Alviso, CA 95002-2160 (US)**

(72) Inventors:
• **BEACH, Brian**
**Santa Cruz, CA 95060 (US)**

• **WATERMAN, Alan**
**Merced, CA 95340 (US)**

(74) Representative: **Dendorfer, Claus et al**
**Dendorfer & Herrmann**
**Patentanwälte Partnerschaft mbB**
**Bayerstrasse 3**
**80335 München (DE)**

(56) References cited:
**WO-A-97/48230     WO-A-98/26594**
**WO-A1-95/31069    WO-A1-96/17473**
**WO-A1-99/30492    US-A- 5 949 954**
**US-A1- 2003 208 761**

## Description

### FIELD OF THE INVENTION

The invention relates generally to a network-based video recording system. More particularly, the invention relates to a method and apparatus for searching a client-side database of program guide information to identify program items of interest.

### DESCRIPTION OF RELATED ART

The number of programming options available to television viewers is constantly increasing, with television programming now available from the major networks, cable channels, satellite, pay-per-view, community access television, and so on. Paralleling this growing availability of television programming is a decrease in the amount of leisure time viewers have for watching television; due to job demands, time spent commuting, family responsibilities and the like. Because of these severe schedule constraints, the complaint is pervasive among viewers that "There's nothing on" when they do have time for television viewing, in spite of the unprecedented availability of television entertainment. This complaint is more a result of the difficulty of matching one's own schedule to network television schedules than it is due to quality or availability of television programming. The ability provided by VCR's and other recording devices to make automatic, unattended recordings of television programs has freed viewers from the dictates of network scheduling.

However, the viewer is still faced with the time-consuming chore of examining schedules for literally hundreds of television channels to identify programs of interest. As a result, electronic program guides have been developed to help viewers deal with the mass of programming information.

Typically, such guides are provided in cable and satellite television environments. The program information is presented in a grid format, organized by time slot and channel. The guide is displayed by scrolling across the screen. However, these guides are not interactive; they cannot be searched, nor can the viewer control the display of information, in any way. The viewer must simply passively watch the information scroll by, hoping that something useful or interesting will pass by.

Searchable program guides are now available. For example, S. Schein, J. Leftwich, *Method and apparatus for searching a guide using program characteristics,* U.S. Patent No. 6,133,909 (October 17, 2000) describe a searchable program guide that allows a viewer to search according to program attributes such as actors or directors. The guide described by Schein, *et al.* eases the viewer's task of locating programs of interest. Unfortunately, the described guide only allows the user to search the guide according to indexed attributes, such as actor or director. However, indexed attributes often fail to anticipate a user's search behavior. Thus, Schein, *et al.* do not provide the user with any way to search outside of those indexed attributes.

WO 96/17473 A1 discloses an electronic program schedule system which includes a receiver for receiving broadcast, satellite or cablecast television programs for a plurality of television channels and a tuner for tuning a television receiver to a selected one of the plurality of channels. A data processor receives and stores in a memory television program schedule information for a plurality of television programs to appear on the plurality of television channels. A user control apparatus, such as a remote controller, is utilized by a viewer to choose user control commands and transmit signals in response to the data processor which receives the signals in response to user control commands. A television receiver is used to display the television programs and television program schedule information. A video display generator is adapted to receive video control commands from said data processor for generating and displaying a plurality of television program titles on said television receiver, said plurality of television programs displayed alphabetically by title. A selection means is provided for allowing to select a title for display on said television receiver by selecting the n characters of said title.

WO 97/48230 A1 teaches a system and a method for obtaining information from an electronic program guide, which allows the user to identify interested programs without searching through the entire program guide, which can be provided by a television system, a set-top box, a VCR, or a computer. After the user identifies a favorite program, the system asks the user a series of questions to identify the particular characteristics of the interested program, then the system identifies all programs which contain the desired characteristics. Whenever the user watches a program, the interactive system, operating in the background, searches for and marks all programs which may be of interest to the user. The user directs the interactive system to search for programs containing desirable characteristics by entering certain attributes into the system. The system then identifies programs within the available electronic program guide which meets the user's requirements.

WO 95/31069 A1 discloses television schedule information transmission and information systems. The systems transmit TV schedule data and associated network control messages as packets via the Video Blanking Interval lines in the TV signals from various television program providers. This data is acquired by regional data processing systems and forwarded to subscriber units and used to construct an internal database. The subscriber units can access this internal database to display a TV schedule for the channels that are received by the user's TV. A Show Title Hash Table is accessed via an index that is a hash value of a unique show ID number, which is a 20 bit binary number. Similarly, a Show Description Hash Table is accessed via an index that is a hash value of a unique description ID number, which is a 16 bit binary number.

The chapter "Hashing algorithms" by Steven Wartik et al., in the book "Information Retrieval: Data Structures and Algorithms", Prentice-Hall, 1992, pages 293-362, discusses the general concept of hashing and some implementation strategies.

WO 99/30492 A1 discloses an electronic program guide that includes an alpha-sorting feature. A letter of the alphabet is displayed in a small window, and titles that begin with this letter are displayed in a column in a large window. One of the titles is highlighted, according to a symbol selected by a viewer. Details about the program having the highlighted title are displayed in an area adjacent to the large window.

From the foregoing, it is apparent than an interactive program guide that affords the viewer more flexible search options would be a significant technological advance.

## SUMMARY OF THE INVENTION

The present invention is defined by the independent claims. The dependent claims concern optional features of some embodiments of the invention.

The invention provides a method and apparatus for searching a database of program information in an interactive, network-based video recording system, in order to identify programs of interest. A viewer enters search terms using a virtual alphanumeric keypad displayed in a viewer interface by means of a remote control. The viewer may search according to program title, indexed attributes such as category, actor, and director; or a key word search allows the viewer to search by program content or subject matter. A prefix matching capability provides a type-ahead feature, so that search terms may be rapidly located in the appropriate index simply by entering one or more of the leading characters of the search term.

## BRIEF DESCRIPTION OF THE DRAWINGS

Figure 1 shows a block diagram of an interactive, network-based video recording system, according to the invention;

Figure 2 shows a top-level screen of a viewer interface for searching an interactive program guide, according to the invention;

Figure 3 shows a screen from the viewer interface of Figure 2 for searching by title, according to the invention;

Figure 4 shows an alphanumeric keypad for searching by title, according to the invention;

Figure 5 shows an alphanumeric keypad for searching by actor name, according to the invention;

Figure 6 shows a category list for narrowing an actor name search, according to the invention;

Figure 7 shows an alphanumeric keypad for searching by keyword, according to the invention; and

Figure 8 shows a category list for narrowing a keyword search, according to the invention.

## DETAILED DESCRIPTION

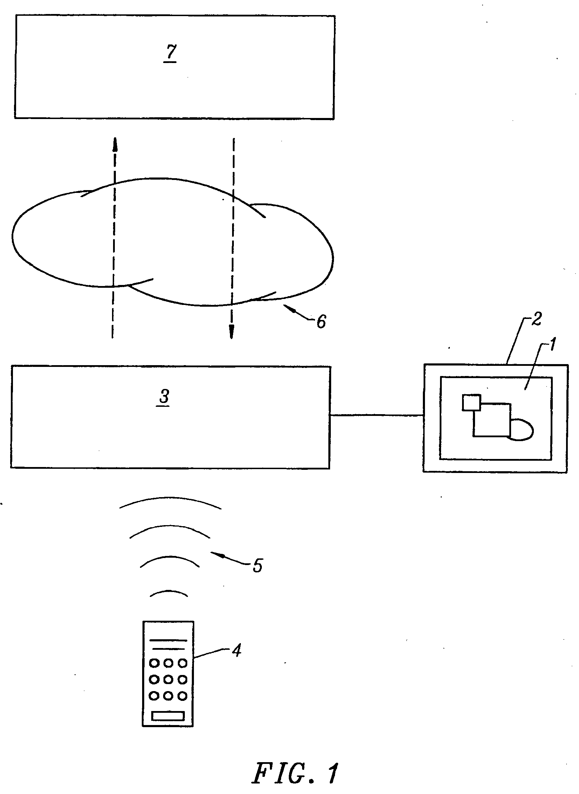

In an interactive, network-based video recording system, a searchable program guide is provided to facilitate the task of identifying programs of interest by the viewer. As shown in Figure 1, a viewer interface 1 to a client unit 3 provides a series of interactive screens that incorporate interface elements such as text boxes, searchable lists, selection bars, and alphanumeric keypads. The viewer navigates the interface and generally interacts with the system by means of a hand-held remote control 4 that communicates with the client unit by means of a data signal 5. In the preferred embodiment, the data signal is embedded in an IR carrier signal, but other carrier signals known to those skilled in the art of wireless data transfer would also be suitable. Typically, the interface is displayed on the screen of a television set 2 connected to the client unit. However, other display means would also be suitable. The client unit is in periodic contact 6 (the arrows denoting the network connection are dashed to indicate the intermittent nature of the connection) with a server 7, during which time, current program information, originating from a vendor, is downloaded to the client unit. After downloading, the program information is imported into a database application resident on a fixed storage medium such as a disk drive. The current embodiment of the invention employs an object-oriented database application, but other types of database applications, such as relational databases, would also be suitable.

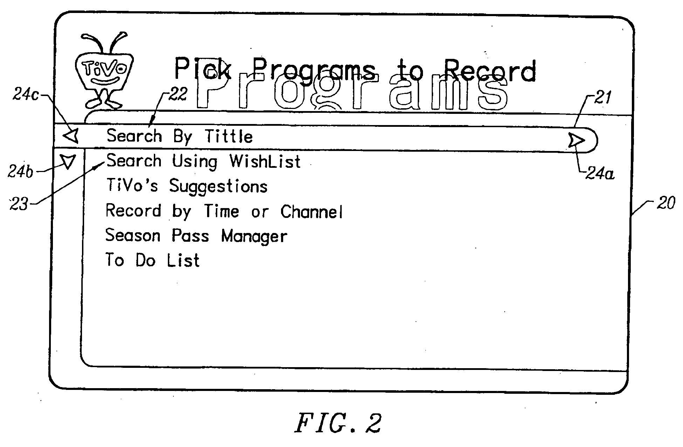

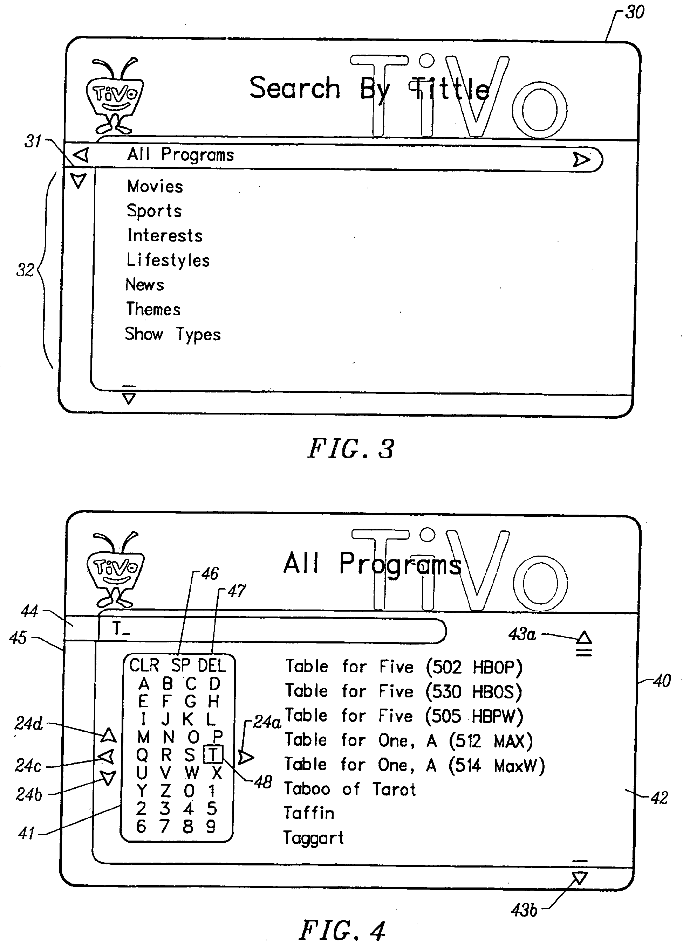

Referring now to Figure 2, shown is a top-level screen 20 to the search interface. A selection bar 21 highlights the various search options available. The first option 22, allows the viewer to search the program guide according to program title. A second option 23, allows the user to create search profiles that search according to actor name, director name, category and key word. In addition, other search options are possible. For example, expanded search functionality may include indices for year of release, language, choreographer, or any other program attribute that could be indexed. Navigating arrows 24 advise the viewer of the navigation options available. For example, in Figure 2, a 'right' arrow 24a navigates the viewer to a screen (Figure 3) for searching by title; a 'down' arrow 24b allows the viewer to scroll through the list of provided options; and a 'left' arrow 24c navigates the viewer back to the previous screen. If the selection bar were positioned farther down in the list of options, an 'up' arrow (not shown) would permit the viewer to scroll up the list. The 'up,' 'down,' 'right' and 'left' arrows are operated by pressing corresponding buttons on the handheld remote control 4. In the example of Figure 2, the viewer selects 'Search by title' 22.

Referring now to Figure 3, a screen 30 is shown that gives the viewer the option of narrowing a title search according to program category, or not, according to the viewer's need or desire. By selecting the 'all programs' option, the search is performed in the entire program database. Selecting a category 32, limits the search to programs defined by the corresponding category descriptor. Limiting a search by category would be most useful when the viewer is browsing for a program of particular type. If the viewer desired to maximize retrieval, or if they were searching for a specific program for which they knew at least a portion of the title, limiting by program category might be less useful.

After choosing a category, the user is navigated to a screen as shown in Figure 4. Shown is a screen 40 displaying a virtual alphanumeric keyboard 41 and a text box 44. The viewer uses the navigation controls (not shown) on the remote control to position a selection marquee 48 around the character of choice. When the selection marquee is properly positioned at the desired character, the viewer presses a 'select' button, upon which the selected character appears in the text box 44. The viewer continues selecting characters, until they have entered at least a portion of the program title in the text box. 'Clear,' 'space' and 'delete' functions 45, 46 and 47, respectively, are provided for clearing the box, inserting a space between words, and deleting single characters. Prefix matching gives the screen a type-ahead capability. Thus, as the viewer enters characters, the title list 42 automatically scrolls to the program items having prefixes that match the character string entered by the viewer. As described previously, the directional arrows 24a - d advise the user of the navigation options available to them. As shown in Figure 4, the selection marquee is positioned around the character 'T' in the rightmost column of the keypad 41. In this case, navigating to the right would cause focus to shift from the keypad to the title list 42. 'Up' and 'down' arrows 43a and b indicate that the viewer may scroll up or down in the title list.

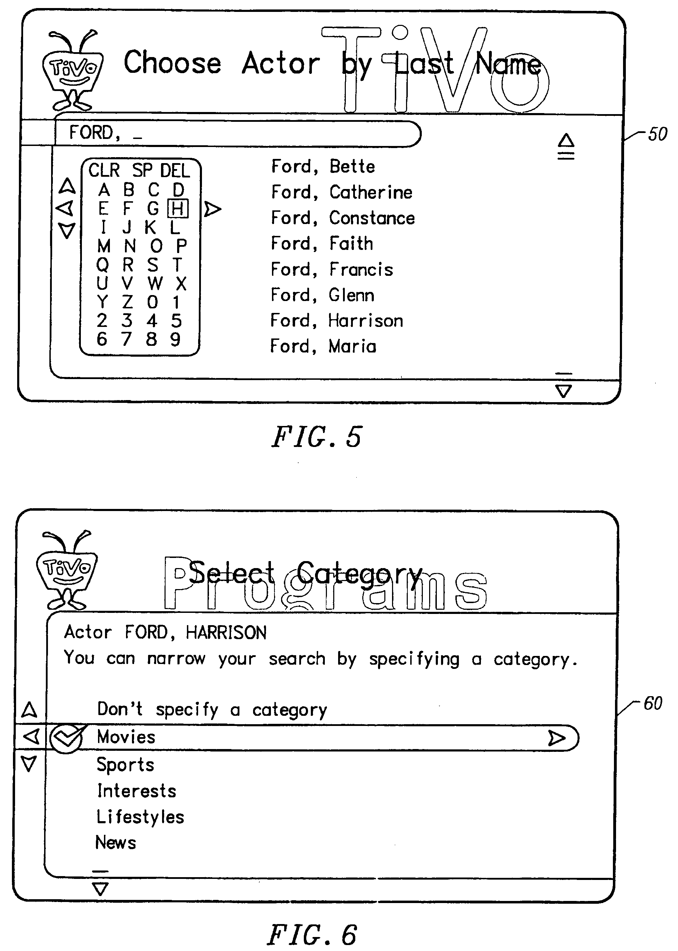

As described above, the viewer may create search profiles in which they search according to indexed program attributes or keywords. Program attributes may include actor name, director name, category, choreographer, language, year of release, and the like. Figure 5 shows a screen 50 for searching according to actor name. It should be noted that searching according to indexed attributes or key word requires the creation of a search profile. When the search profile is created, it may be saved and named. Interaction with the search screen 50 is analogous to that previously described for the title entry screen, thus it will not be further described. As Figure 6 shows, following entry of an actor name, a screen 60 allows the user to narrow a search according to category, if desired. Another set of screens (not shown) is provided for searching according to director name. Their appearance and function is analogous to those for searching according to actor name, thus they will not be further described.

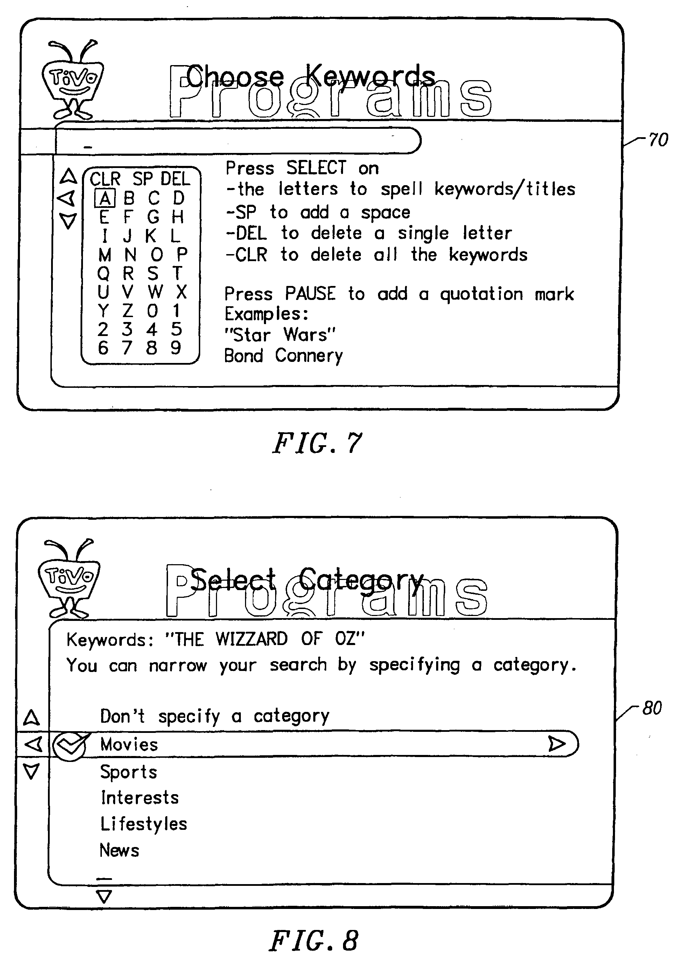

Figures 7 and 8 show screens 70 and 80 for searching according to key word and narrowing according to category, respectively. As previously described, keyword searching requires the creation of a search profile. As will be described below, key words are extracted from actor and director names, titles and a narrative program description.

The key word search feature is highly advantageous in that it provides an important additional access point not found in conventional program guides. It is a well-known problem to those skilled in the design of publicly accessible information retrieval systems that it is impossible to anticipate a user's search behavior with complete certainty. Thus, no matter how skillfully indexed an information base may be, it will be unable to accommodate the information-seeking behavior of all users. Therefore, to provide a system that delivers maximum serviceability to its constituency, it is highly desirable to provide as many different access points as possible. By including a key word search feature, the current invention provides an important, highly flexible means of accessing program content and subject matter outside of the indexed attributes.

The method of interacting with the key word search screens is exactly analogous to the screens previously described. Thus, they will not be further described.

## INDEXING

As previously noted, the video recording system of the present invention is network-based, consisting of a central server, and a plurality of client units, each client being in periodic communication with the server. In the preferred embodiment of the invention, the network connection is a dial-up connection over a publicly available telecommunication network. However, other network connections, a wireless connection, for example, would be equally suitable. In the preferred embodiment of the invention, the client is in communication with the server for a brief period on a daily basis. During the daily connection period, the client downloads current program guide data. The downloaded program information is imported into an object-oriented database resident on the client. As previously indicated, when a viewer searches the database to find programs of interest, they may search by program name, by indexed attributes such as actor name or director name; and by keyword. A direct, sequential search of the records in the database objects would be prohibitively time-consuming and would waste system resources, unfavorably affecting the usability of the program guide. Thus, the database is indexed, and searches are conducted on the provided index files, greatly improving search efficiency.

While the database may include other objects, the title search feature is concerned primarily with the 'Series' object. The attribute search and key word search features are concerned primarily with the 'Program' object. The 'Series' object includes a record for each television series. For the title search, the most important field of the 'Series' object is the series 'Title' field. The attribute search and the key word search are concerned primarily with the 'Program' object. The 'Program' object includes a record for each individual program item, where an individual program item might be a single episode of a series, for example. The' Program' object includes at least the following fields:

- Title;
- Episode title;
- Description;
- Actors
- Hosts;
- Guest stars; and
- Directors.

The above list is not intended to be limiting. Other record configurations consistent with the spirit and scope of the invention are possible. Information is extracted from the individual records and assembled into a series of index files. For the title search feature, a 'Title' index is constructed. For the attribute search feature, 'Actor' and 'Director' indices are built. Finally, for the key word search, a 'Key word' index and a 'Title word' index are provided.

Generally, the process of indexing the database includes the following steps:

- Extracting index terms from the database records;
- Constructing intermediate files from the extracted index terms;
- Creating raw, unsorted index files from the intermediate files;
- Sorting the raw index files; and
- Compressing the sorted files to form final index files.

The several steps of the indexing process are described in greater detail below.

For the 'Title' index, the entire series title is extracted as a text string from the 'Title' field of each 'Series' record, with each text string constituting a separate index term, or key.

For the 'Actor' index, each name is extracted from the 'Actors,' 'Hosts' and 'Guest stars' fields of the 'Program' records, with each name from each record constituting a separate actor key. Similarly, for the 'Director' index, each name is extracted from the 'Directors' field, with each name from each record constituting a separate director key.

For the 'Title word' index, each separate word, having a length of at least two characters, of each title from both the 'Title' and 'Episode title' fields is extracted, with each separate word constituting a separate title word. For the 'Key word' index, each separate word having a length of at least two characters is extracted from the 'Description' field, with each occurrence of each word constituting a separate key word.

Following key extraction, the keys are assembled into intermediate files: one for each of 'Ttitle,' 'Actor,' 'Director,' 'Title word' and 'Key word'. The 'Title' intermediate file includes the 'Title' keys, the 'Actor' intermediate file includes the 'Actor,' 'Host' and 'Guest star' keys, and the 'Director' intermediate file includes the 'Director' keys, with the names in the 'Actor' and 'Director' keys listed directory style: last name and first name, separated by a comma. The 'Title word' file includes the title words extracted form the 'Title' and 'Episode title' fields of the 'Program' object. The 'Key word' file, however, is constructed differently from the previous intermediate files. Each key word forms a separate entry in the 'Key word' file. Additionally, actor names are incorporated into the 'Key word' index. The actor names are parsed into separate first and last names, and then added to the 'Key word' intermediate file. Thus the 'Key word' file includes the words from the,' 'Description' field and the name words from the 'Actors,' 'Hosts' and 'Guest stars' fields. The end result of this step is an intermediate file for each of 'Title,' 'Actor,' 'Director,' Title word' and 'key word,' each comprising a simple listing of the respective keys or index terms, in a text file.

The intermediate files are subsequently used to build raw, unsorted index files. Each key of the intermediate files described above is paired with a program identifier that corresponds to the record that the key originated from. The program identifier is a system-generated, alphanumeric identifier, distinct from the program identifiers assigned by commercial programming information vendors such as TRIBUNE MEDIA SERVICES. The raw index files take the form of delimited text files; however other data structures, such as tables, would be equally suitable. In the preferred embodiment of the invention, the files are formatted as follows:

$$\text{<KEY> <TAB> <PROG ID>}$$
$$.$$
$$.$$
$$.$$
$$.$$
$$.$$
$$\text{<KEY> <TAB> <PROG ID>.}$$

As will be described further below, a binary search algorithm is employed to search the indices, requiring that the index be sorted. Thus, the raw index files are sorted on the keys.

The sorted index files are subsequently compressed by eliminating redundant keys, so that each distinct key is paired with a list of the program identifiers corresponding to each occurrence of the key in the database. In the preferred embodiment of the invention, the compressed index files are also delimited text files, formatted as follows:

CAT            $<$TAB$>$ $<ID_1, ID_2, ..., ID_N>$
LASER       $<$TAB$>$ $<ID_1, ID_2, ..., ID_N>$
STAR        $<$TAB$>$ $<ID_1, ID_2, ..., ID_N>$
TREK        $<$TAB$>$ $<ID_1, ID_2, ..., ID_N>$,

Where 'cat,' 'laser,' 'star' and 'trek' might be title words or key words and '$ID_1, ID_2, ..., ID_N$' is a list of program identifiers for each unique key.

## SEARCH ALGORITHM

A search engine employing a binary search algorithm is used to search the various indices. In general, the binary algorithm begins with an interval covering the whole search space. The search space is repeatedly divided in half according to how the search value compares with the middle element. If the search value is less than the item in the middle of the interval, the interval is narrowed to the lower half; otherwise it is narrowed to the other half. The operation is performed until the search value is found or the interval is empty.

As described above, the key word search includes title words. Therefore, during a key word search, a binary search of both the 'Keyword' index and the 'Title word' index is performed.

Although the invention has been described herein with reference to certain preferred embodiments, one skilled in the art will readily appreciate that other applications may be substituted without departing from the scope of the present invention. Accordingly, the invention should only be limited by the Claims included below.

## Claims

1. A system for searching an interactive television program guide database, said system comprising:

a client (3), wherein said client (3) is in periodic communication (6) with a server (7), and wherein said client (3) downloads current program information from said server (7);
a program guide database resident on said client (3), wherein said program information is imported into said database;
means, at said client (3), for extracting text from fields in the program guide information;

means, at said client (3), for processing the extracted text to create keys, each created key is associated with a program identifier;
means, at said client (3), for sorting the created keys;
means, at said client (3), for eliminating redundant keys from the created keys to create a set of unique keys so that each unique key is paired with a list of program identifiers corresponding to each occurrence of the unique key in the created keys before the elimination of redundant keys;
means, at said client (3), for creating a plurality of indexes based on said program information containing at least some of the unique keys and associated lists of program identifiers for said database, each index in the plurality of indexes is created for a specific search feature;
an interactive viewer interface (1) for picking programs to record on said client (3) displayed on a display means in communication with said client (3);
means for interacting with said viewer interface (1) by a viewer;
wherein said viewer interface (1) incorporates a prefix matching feature that displays, in a scrolling list, items in said database associated with unique keys that have prefixes that match the viewer's alphanumeric input and automatically scrolls the list as the viewer enters the alphanumeric input; and
means for searching said database according to a search feature by comparing unique keys in a selected index to viewer alphanumeric input according to at least one of:

program title;
indexed program attributes; and
key words;

wherein an index is selected to be searched by the searching means based on the viewer's selection of a search feature.

2. The system of Claim 1, wherein said system is an interactive, network-based video recording system.

3. The system of Claim 1, wherein said viewer interface (1) displays a database search screen (40, 50, 70) having interface elements for navigation, entering search values and displaying search results.

4. The system of Claim 3, wherein said means for interacting with said interface comprises a remote control unit (4), said remote control unit (4) communicating with said client (3) by means of a data signal (5).

**5.** The system of Claim 4, wherein said data signal (5) is embedded in a carrier signal.

**6.** The system of Claim 1, wherein said means for searching said database comprises a screen (30, 60, 80) for optionally selecting a program category.

**7.** The system of Claim 1, wherein said means for searching said database further comprises a screen (40) for entering a program title and displaying a list of program titles (42), said screen (40) for entering a program title and displaying a list of program titles (42) comprising:

a virtual alphanumeric keypad (41) for entering alphanumeric characters to spell said program title;
a text box (44) for displaying said entered alphanumeric characters; and
a scrollable list of program titles (42), wherein said prefix matching feature causes said list of program titles (42) to automatically scroll to titles in said list (42) having prefixes that match a character string displayed in said text box (44).

**8.** The system of Claim 7, wherein the viewer enters alphanumeric characters by activating controls on a remote control (4) that correspond to virtual controls on said virtual alphanumeric keypad.

**9.** The system of Claim 1, wherein said means for searching said database further comprises:

a screen (50) for searching according to Director or Actor name; and
wherein said screen (50) for searching according to Director or Actor name comprises:

a virtual alphanumeric keypad for entering alphanumeric characters to spell a Director or Actor name;
a text box for displaying said entered alphanumeric characters; and
a scrollable list of Director or Actor names, wherein said prefix matching feature causes said list of Director or Actor names to automatically scroll to Director or Actor names in said list having prefixes that match a character string displayed in said text box.

**10.** The system of Claim 9, further comprising:

a screen (60) following said Director or Actor name screen (50) for optionally selecting a program category.

**11.** The system of Claim 9, wherein the viewer enters characters by activating controls on a remote control (4) that correspond to virtual controls on said virtual alphanumeric keypad.

**12.** The system of Claim 1, wherein said means for searching said database comprises a screen (30, 60, 80) for optionally selecting a program category.

**13.** The system of Claim 1, wherein said means for searching said database further comprises a screen (70) for entering a key word, said screen for entering a key word (70) comprising:

a virtual alphanumeric keypad for entering alphanumeric characters to spell said key word;
a text box for displaying said entered alphanumeric characters; and
a scrollable list of key words, wherein said prefix matching feature causes said list of key words to automatically scroll to key words in said list having prefixes that match a character string displayed in said text box.

**14.** The system of Claim 15, wherein the viewer enters characters by activating controls on a remote control (4) that correspond to virtual controls on said virtual alphanumeric keypad.

**15.** The system of Claim 1, wherein said indexed attributes include any of:

Actor name;
Director name;
Host name;
Guest star name;
Choreographer;
Year of release;
Category; and
Language.

**16.** The system of Claim 1, wherein said program guide database comprises an object-oriented database application, said database application including at least:

a 'Series' object; and
a 'Program' object.

**17.** The system of Claim 16, wherein said 'Series' object includes a series 'Title' field.

**18.** The system of Claim 17, wherein said program guide database further comprises a 'Title' index, said 'Title' index being built from entries in said 'Series' title field.

**19.** The system of Claim 18, wherein said means for searching said database comprises a search engine for searching said 'Title' index.

**20.** The system of Claim 16, wherein said 'Program' object includes fields for:

 Title;
 Episode title;
 Description;
 Actors
 Hosts;
 Guest stars; and
 Directors.

**21.** The system of Claim 20, wherein said database further comprises an 'Actor' index, said 'Actor' index being built from entries in said 'Actors,' 'Hosts,' and 'Guest stars' fields.

**22.** The system of Claim 21, wherein said database further comprises a 'Director' index, said 'Director' index being built from entries in said 'Director' field.

**23.** The system of Claim 22, wherein said means for searching said database comprises a search engine for searching said 'Actor' and said 'Director' indices.

**24.** The system of Claim 20, wherein said database further comprises a 'Title word' index, said 'Title word' index being built from said 'Title' fields and said 'Episode title' fields.

**25.** The system of Claim 24, wherein said database further comprises a 'Key word' index, said 'Key word' index being built from words in said 'Description' field, said 'Actors' field, said 'Hosts' field and said 'Guest stars' field.

**26.** The system of Claim 25, wherein said means for searching said database comprises a search engine for searching said 'Title word' index and said 'Key word' index.

**27.** A method of searching an interactive television program guide database, comprising:

 importing program information into a program guide database resident on a client (3);
 wherein said client (3) is in periodic communication (6) with a server (7), and wherein said client (3) downloads current program information from said server (7);
 extracting, at said client (3), text from fields in the program guide information;
 processing, at said client (3), the extracted text to create keys, each created key is associated with a program identifier;
 sorting, at said client (3), the created keys;
 eliminating, at said client (3), redundant keys from the created keys to create a set of unique keys so that each unique key is paired with a list of program identifiers corresponding to each occurrence of the unique key in the created keys before the elimination of redundant keys;
 creating, at said client (3), a plurality of indexes based on said program information containing at least some of the unique keys and associated lists of program identifiers for said database, each index in the plurality of indexes is created for a specific search feature;
 interacting with a viewer via an interactive viewer interface (1) for picking programs to record on said client (3) displayed on a display means in communication with said client (3);
 wherein said viewer interface (1) incorporates a prefix matching feature that displays, in a scrolling list, items in said database associated with unique keys that have prefixes that match the viewer's alphanumeric input and automatically scrolls the list as the viewer enters the alphanumeric input; and
 searching said database according to a search feature by comparing unique keys in a selected index to viewer alphanumeric input according to at least one of:

  program title;
  indexed program attributes; and
  key words;

wherein an index is selected to be searched by the searching step based on the viewer's selection of a search feature.

**28.** The method of Claim 27, wherein said method is incorporated in an interactive, network-based video recording system.

**29.** The method of Claim 27, wherein said viewer interface (1) displays a database search screen (40, 50, 70) having interface elements for navigation, entering search values and displaying search results.

**30.** The method of Claim 29, wherein a remote control unit (4) is used to interface with said interactive viewer interface (1), said remote control unit (4) communicating with said client (3) by means of a data signal (5).

**31.** The method of Claim 30, wherein said data signal (5) is embedded in a carrier signal.

**32.** The method of Claim 27, wherein said searching step further comprises:

 optionally, selecting a program category in a first screen (30); and
 entering a program title in a second screen (40), said second screen (40) comprising:

a virtual alphanumeric keypad (41) for entering alphanumeric characters to spell said program title;
a text box (44) for displaying said entered alphanumeric characters; and
a scrollable list of program titles (42), wherein said prefix matching feature causes said list of program titles (42) to automatically scroll to titles in said list (42) having prefixes that match a character string displayed in said text box (44).

33. The method of Claim 32, wherein the viewer enters characters by activating controls on said remote control (4) that correspond to virtual controls on said virtual alphanumeric keypad.

34. The method of Claim 27, wherein said searching step further comprises:

displaying a screen (50) for searching according to Director or Actor name; and
wherein said displaying a screen (50) for searching according to Director or Actor name step further comprises:

displaying a virtual alphanumeric keypad for entering alphanumeric characters to spell a Director or Actor name;
displaying a text box for displaying said entered alphanumeric characters; and
displaying a scrollable list of Director or Actor names, wherein said prefix matching feature causes said list of Director or Actor names to automatically scroll to Director or Actor names in said list having prefixes that match a character string displayed in said text box.

35. The method of Claim 34, further comprising:

displaying a screen (60) following said Director or Actor name screen for optionally selecting a program category.

36. The method of Claim 34, wherein the viewer enters characters by activating controls on a remote control (4) that correspond to virtual controls on said virtual alphanumeric keypad.

37. The method of Claim 27, wherein said searching step comprises displaying a screen (30, 60, 80) for optionally selecting a program category.

38. The method of Claim 27, wherein said searching step comprises:

displaying a screen (70) for entering a key word, said screen displaying step comprising displaying:

a virtual alphanumeric keypad for entering alphanumeric characters to spell said key word;
a text box for displaying said entered characters; and
a scrollable list of key words, wherein said prefix matching feature causes said list of key words to automatically scroll to key words in said list having prefixes that match a character string displayed in said text box.

39. The method of Claim 38, wherein the viewer enters characters by activating controls on a remote control (4) that correspond to virtual controls on said virtual alphanumeric keypad.

40. The method of Claim 27, wherein said indexed attributes include any of:

Actor name;
Director name;
Host name;
Guest star name;
Choreographer;
Year of release;
Category; and
Language.

41. The method of Claim 27, wherein said program guide database comprises an object-oriented database application, said database application including at least:

a 'Series' object; and
a 'Program' object.

42. The method of Claim 41, wherein said 'Series' object includes a series 'Title' field.

43. The method of Claim 42, wherein said program guide database further comprises a 'Title' index, said 'Title' index being built from said series 'Title' field.

44. The method of Claim 43, wherein said searching step comprises a search engine for searching said 'Title' index.

45. The method of Claim 41, wherein said 'Program' object includes fields for:

Title;
Episode title;
Description;
Actors
Hosts;

Guest stars; and
Directors.

46. The method of Claim 45, wherein said database further comprises an 'Actor' index, said 'Actor' index being built from said 'Actors,' 'Hosts', and 'Guest stars' fields.

47. The method of Claim 46, wherein said database further comprises a 'Director' index, said 'Director' index being built from entries in said 'Director' field.

48. The method of Claim 47, wherein said searching step comprises a search engine for searching said 'Actor' and said 'Director' indices.

49. The method of Claim 45, wherein said database further comprises a 'Title word' index, said 'Title word' index being built from entries in said 'Title' fields and said 'Episode title' fields.

50. The method of Claim 49, wherein said database further comprises a 'Key word' index, said 'Key word' index being built from said words in said 'Description' field, said 'Actors' field, said 'Hosts' field and said 'Guest stars' field.

51. The method of Claim 50, wherein said searching step comprises a search engine for searching said 'Title word' index and said 'Key word' index.

**Patentansprüche**

1. System zum Durchsuchen einer interaktiven Fernsehprogrammführer-Datenbank, wobei das System aufweist:

einen Client (3), wobei der Client (3) in periodischer Kommunikation (6) mit einem Server (7) ist, und wobei der Client (3) aktuelle Programminformation von dem Server (7) herunterlädt;
eine Programmführer-Datenbank, die bei dem Client (3) angesiedelt ist, wobei die Programminformation in die Datenbank importiert wird;
eine Einrichtung, bei dem Client (3), zum Extrahieren von Text aus Feldern in der Programmführerinformation;
eine Einrichtung, bei dem Client (3), zur Verarbeitung des extrahierten Texts, um Schlüssel zu erzeugen, wobei jeder erzeugte Schlüssel einer Programmkennung zugehörig ist;
eine Einrichtung, bei dem Client (3), zur Sortieren der erzeugten Schlüssel;
eine Einrichtung, bei dem Client (3), zum Eliminieren von redundanten Schlüsseln aus den erzeugten Schlüsseln, um einen Satz von eindeutigen Schlüsseln zu erzeugen, so dass jeder eindeutige Schlüssel mit einer Liste von Programmkennungen gepaart ist, und zwar entsprechend jedem Vorkommen des eindeutigen Schlüssels in den erzeugten Schlüsseln vor der Elimination von redundanten Schlüsseln;
eine Einrichtung, bei dem Client (3), zum Erzeugen einer Mehrzahl von Indizes basierend auf der Programminformation, die zumindest einige der eindeutigen Schlüssel und zugehörige Listen von Programmkennungen für die Datenbank enthalten, wobei jeder Index der Mehrzahl von Indizes für ein spezifisches Suchmerkmal erzeugt wird;
eine interaktive Betrachterschnittstelle (1) für ein Auswählen von Programmen zum Aufzeichnen auf dem Client (3), die auf einer in Kommunikation mit dem Client (3) befindlichen Anzeigeeinrichtung angezeigt wird;
eine Einrichtung für ein Interagieren mit der Betrachterschnittstelle (1) durch einen Betrachter;
wobei die Betrachterschnittstelle (1) eine Funktion zum Abgleichen von Anfangszeichen beinhaltet, mittels derer in einer Bildlaufliste Elemente in der Datenbank angezeigt werden, die eindeutigen Schlüsseln zugehörig sind, deren Anfangszeichen mit der alphanumerischen Eingabe des Betrachters übereinstimmen, und mittels derer, während der alphanumerischen Eingabe durch den Benutzer, ein automatischer Bildlauf der Liste durchgeführt wird; und
eine Einrichtung zum Durchsuchen der Datenbank gemäß einem Suchmerkmal, und zwar indem eindeutige Schlüssel in einem gewählten Index mit einer alphanumerischen Eingabe des Betrachters verglichen werden, gemäß mindestens einem von:

Programmtitel;
indexierten Programmattributen; und
Schlüsselwörtern;

wobei ein Index, der durch die Sucheinrichtung durchsucht werden soll, basierend auf der durch einen Betrachter erfolgenden Auswahl eines Suchmerkmals ausgewählt wird.

2. System nach Anspruch 1, wobei das System ein interaktives, Netzwerk-basiertes Videoaufzeichnungssystem ist.

3. System nach Anspruch 1, wobei die Betrachterschnittstelle (1) eine Datenbanksuchmaske (40, 50, 70) anzeigt, die Schnittstellenelemente für ein Navigieren, ein Eingeben von Suchwerten und ein Anzeigen von Suchergebnissen aufweist.

4. System nach Anspruch 3, wobei die Einrichtung für ein Interagieren mit der Schnittstelle eine Fernsteuereinheit (4) aufweist, wobei die Fernsteuereinheit (4) mit dem Client (3) mittels eines Datensignals (5) kommuniziert.

5.  System nach Anspruch 4, wobei das Datensignal (5) in ein Trägersignal eingebettet ist.

6.  System nach Anspruch 1, wobei die Einrichtung für ein Durchsuchen der Datenbank eine Maske (30, 60, 80) für ein optionales Auswählen einer Programmkategorie aufweist.

7.  System nach Anspruch 1, wobei die Einrichtung für ein Durchsuchen der Datenbank weiter eine Maske (40) für ein Eingeben eines Programmtitels und ein Anzeigen einer Liste von Programmtiteln (42) aufweist, wobei die Maske (40) für ein Eingeben eines Programmtitels und ein Anzeigen einer Liste von Programmtiteln (42) aufweist:

    ein virtuelles alphanumerisches Tastenfeld (41) für ein Eingeben von alphanumerischen Zeichen, um den Programmtitel zu buchstabieren; ein Textfeld (44) zum Anzeigen der eingegebenen alphanumerischen Zeichen; und eine per Bildlauf durchsehbare Liste von Programmtiteln (42), wobei die Funktion zum Abgleichen von Anfangszeichen veranlasst, dass bei der Liste von Programmtiteln (42) ein automatischer Bildlauf zu Titeln in der Liste (42) durchgeführt wird, die Anfangszeichen aufweisen, welche mit einer in dem Textfeld (44) angezeigten Zeichenkette übereinstimmen.

8.  System nach Anspruch 7, wobei der Betrachter alphanumerische Zeichen durch Aktivieren von Steuereinrichtungen auf einer Fernsteuereinrichtung (4) eingibt, die virtuellen Steuereinrichtungen auf dem virtuellen alphanumerischen Tastenfeld entsprechen.

9.  System nach Anspruch 1, wobei die Einrichtung zum Durchsuchen der Datenbank weiter aufweist:

    eine Maske (50) für ein Durchsuchen gemäß einem Regisseur- oder Schauspieler-Namen; und wobei die Maske (50) für ein Durchsuchen gemäß einem Regisseur- oder Schauspieler-Namen aufweist:

    ein virtuelles alphanumerisches Tastenfeld zum Eingeben von alphanumerischen Zeichen, um einen Regisseur- oder Schauspieler-Namen zu buchstabieren; ein Textfeld für ein Anzeigen der eingegebenen alphanumerischen Zeichen; und eine per Bildlauf durchsehbare Liste von Regisseur- oder Schauspieler-Namen, wobei die Funktion zum Abgleichen von Anfangszeichen veranlasst, dass bei der Liste von Regisseur- oder Schauspieler-Namen ein automatischer Bildlauf zu Regisseur- oder Schauspieler-Namen in der Liste durchgeführt wird, die Anfangszeichen aufweisen, welche mit einer in dem Textfeld angezeigten Zeichenkette übereinstimmen.

10. System nach Anspruch 9, weiter aufweisend:

    eine Maske (60), die auf die für Regisseur- oder Schauspieler-Namen dienende Maske (50) folgt, für ein optionales Auswählen einer Programmkategorie.

11. System nach Anspruch 9, wobei der Betrachter Zeichen durch Aktivieren von Steuereinrichtungen auf einer Fernsteuereinrichtung (4) eingibt, die virtuellen Steuereinrichtungen auf dem virtuellen alphanumerischen Tastenfeld entsprechen.

12. System nach Anspruch 1, wobei die Einrichtung zum Durchsuchen der Datenbank eine Maske (30, 60, 80) für ein optionales Auswählen einer Programmkategorie aufweist.

13. System nach Anspruch 1, wobei die Einrichtung zum Durchsuchen der Datenbank weiter eine Maske (70) für ein Eingeben eines Schlüsselwortes aufweist, wobei die Maske für ein Eingeben eines Schlüsselwortes (70) aufweist:

    ein virtuelles alphanumerisches Tastenfeld für ein Eingeben von alphanumerischen Zeichen, um das Schlüsselwort zu buchstabieren; ein Textfeld zum Anzeigen der eingegebenen alphanumerischen Zeichen; und eine per Bildlauf durchsehbare Liste von Schlüsselwörtern, wobei die Funktion zum Abgleichen von Anfangszeichen veranlasst, dass bei der Liste von Schlüsselwörtern ein automatischer Bildlauf zu Schlüsselwörtern in der Liste durchgeführt wird, die Anfangszeichen aufweisen, welche mit einer in dem Textfeld angezeigten Zeichenkette übereinstimmen.

14. System nach Anspruch 13, wobei der Betrachter Zeichen durch Aktivieren von Steuereinrichtungen auf einer Fernsteuereinrichtung (4) eingibt, die virtuellen Steuereinrichtungen auf dem virtuellen alphanumerischen Tastenfeld entsprechen.

15. System nach Anspruch 1, wobei die indexierten Attribute beliebige beinhalten von:

    Name des Schauspielers;

Name des Regisseurs;
Name des Moderators;
Name des Gaststars;
Choreograph;
Jahr der Veröffentlichung;
Kategorie; und
Sprache.

16. System nach Anspruch 1, wobei die Programmführer-Datenbank eine objektorientierte Datenbankanwendung aufweist, wobei die Datenbankanwendung zumindest beinhaltet:

ein "Serie"-Objekt; und
ein "Programm"-Objekt.

17. System nach Anspruch 16, wobei das "Serie"-Objekt ein "Titel"-Feld einer Serie beinhaltet.

18. System nach Anspruch 17, wobei die Programmführer-Datenbank weiter einen "Titel"-Index aufweist, wobei der "Titel"-Index aus Einträgen in dem "Titel"-Feld einer Serie aufgebaut ist.

19. System nach Anspruch 18, wobei die Einrichtung zum Durchsuchen der Datenbank eine Suchmaschine zum Durchsuchen des "Titel"-Index aufweist.

20. System nach Anspruch 16, wobei das "Programm"-Objekt Felder beinhaltet für:

Titel;
Episodentitel;
Beschreibung;
Schauspieler;
Moderatoren;
Gaststars; und
Regisseure.

21. System nach Anspruch 20, wobei die Datenbank weiter einen "Schauspieler"-Index aufweist, wobei der "Schauspieler"-Index aus Einträgen in den Feldern "Schauspieler", "Moderatoren" und "Gaststars" aufgebaut ist.

22. System nach Anspruch 21, wobei die Datenbank weiter einen "Regisseur"-Index aufweist, wobei der "Regisseur"-Index aus Einträgen in dem "Regisseur"-Feld aufgebaut ist.

23. System nach Anspruch 22, wobei die Einrichtung zum Durchsuchen der Datenbank eine Suchmaschine zum Durchsuchen der Indizes "Schauspieler" und "Regisseur" aufweist.

24. System nach Anspruch 20, wobei die Datenbank weiter einen "Titelwort"-Index aufweist, wobei der "Titelwort"-Index" aus den "Titel"-Feldern und den "Episodentitel"-Feldern aufgebaut ist.

25. System nach Anspruch 24, wobei die Datenbank weiter einen "Schlüsselwort"-Index aufweist, wobei der "Schlüsselwort"-Index aus Wörtern in den Feldern "Beschreibung", "Schauspieler", "Moderatoren" und "Gaststars" aufgebaut ist.

26. System nach Anspruch 25, wobei die Einrichtung zum Durchsuchen der Datenbank eine Suchmaschine zum Durchsuchen des "Titelwort"-Index und des "Schlüsselwort"-Index aufweist.

27. Verfahren zum Durchsuchen einer interaktiven Fernsehprogrammführer-Datenbank, umfassend:

Importieren von Programminformation in eine Programmführer-Datenbank, die bei einem Client (3) angesiedelt ist;
wobei der Client (3) in periodischer Kommunikation (6) mit einem Server (7) ist, und wobei der Client (3) aktuelle Programminformation von dem Server (7) herunterlädt;
Extrahieren, bei dem Client (3), von Text aus Feldern in der Programmführer-Information;
Verarbeiten, bei dem Client (3), des extrahierten Texts, um Schlüssel zu erzeugen, wobei jeder erzeugte Schlüssel einer Programmkennung zugehörig ist;
Sortieren, bei dem Client (3), der erzeugten Schlüssel;
Eliminieren, bei dem Client (3), von redundanten Schlüsseln aus den erzeugten Schlüsseln, um einen Satz von eindeutigen Schlüsseln zu erzeugen, so dass jeder eindeutige Schlüssel mit einer Liste von Programmkennungen gepaart ist, und zwar entsprechend jedem Vorkommen des eindeutigen Schlüssels in den erzeugten Schlüsseln vor der Elimination von redundanten Schlüsseln;
Erzeugen, bei dem Client (3), einer Mehrzahl von Indizes basierend auf der Programminformation, die zumindest einige der eindeutigen Schlüssel und zugehörige Listen von Programmkennungen für die Datenbank enthalten, wobei jeder Index der Mehrzahl von Indizes für ein spezifisches Suchmerkmal erzeugt wird;
Interagieren mit einem Betrachter über eine interaktive Betrachterschnittstelle (1) für ein Auswählen von Programmen zum Aufzeichnen auf dem Client (3), die auf einer in Kommunikation mit dem Client (3) befindlichen Anzeigeeinrichtung angezeigt wird;
wobei die Betrachterschnittstelle (1) eine Funktion zum Abgleichen von Anfangszeichen beinhaltet, mittels derer in einer Bildlaufliste Elemente in der Datenbank angezeigt werden, die eindeutigen Schlüsseln zugehörig sind, deren Anfangszeichen mit der alphanumerischen Eingabe des Betrachters übereinstimmen, und mittels derer, während der alphanumerischen Eingabe durch den Benutzer, ein automatischer Bildlauf der Liste durchgeführt wird; und
Durchsuchen der Datenbank gemäß einem Suchmerkmal, und zwar indem eindeutige Schlüssel in einem gewählten Index mit einer alphanumerischen Eingabe des Betrachters verglichen werden, gemäß mindestens einem von:

Programmtitel;
indexierten Programmattributen; und
Schlüsselwörtern;

wobei ein Index, der bei dem Suchschritt durchsucht werden soll, basierend auf der durch einen Betrachter erfolgenden Auswahl eines Suchmerkmals ausgewählt wird.

28. Verfahren nach Anspruch 27, wobei das Verfahren in ein interaktives, Netzwerk-basiertes Videoaufzeichnungssystem inkorporiert ist.

29. Verfahren nach Anspruch 27, wobei die Betrachterschnittstelle (1) eine Datenbanksuchmaske (40, 50, 70) anzeigt, die Schnittstellenelemente für ein Navigieren, ein Eingeben von Suchwerten und ein Anzeigen von Suchergebnissen aufweist.

30. Verfahren nach Anspruch 29, wobei eine Fernsteuereinheit (4) als Schnittstelle zur interaktiven Betrachterschnittstelle (1) verwendet wird, wobei die Fernsteuereinheit (4) mit dem Client (3) mittels eines Datensignals (5) kommuniziert.

31. Verfahren nach Anspruch 30, wobei das Datensignal (5) in ein Trägersignal eingebettet ist.

32. Verfahren nach Anspruch 27, wobei der Suchschritt weiter umfasst:

optional, Auswählen einer Programmkategorie in einer ersten Maske (30); und
Eingeben eines Programmtitels in eine zweite Maske (40), wobei die zweite Maske (40) aufweist:

ein virtuelles alphanumerisches Tastenfeld (41) für ein Eingeben von alphanumerischen Zeichen, um den Programmtitel zu buchstabieren;
ein Textfeld (44) zum Anzeigen der eingegebenen alphanumerischen Zeichen; und
eine per Bildlauf durchsehbare Liste von Programmtiteln (42), wobei die Funktion zum Abgleichen von Anfangszeichen veranlasst, dass bei der Liste von Programmtiteln (42) ein automatischer Bildlauf zu Titeln in der Liste (42) durchgeführt wird, die Anfangszeichen aufweisen, welche mit einer in dem Textfeld (44) angezeigten Zeichenkette übereinstimmen.

33. Verfahren nach Anspruch 32, wobei der Betrachter Zeichen durch Aktivieren von Steuereinrichtungen auf einer Fernsteuereinrichtung (4) eingibt, die virtuellen Steuereinrichtungen auf dem virtuellen alphanumerischen Tastenfeld entsprechen.

34. Verfahren nach Anspruch 27, wobei der Suchschritt weiter umfasst:

Anzeigen einer Maske (50) für ein Durchsuchen gemäß einem Regisseur- oder Schauspieler-Namen; und
wobei der Schritt des Anzeigens einer Maske (50) für ein Durchsuchen gemäß einem Regisseur- oder Schauspieler-Namen weiter beinhaltet:

Anzeigen eines virtuellen alphanumerischen Tastenfeldes zum Eingeben von alphanumerischen Zeichen, um einen Regisseur- oder Schauspieler-Namen zu buchstabieren;
Anzeigen eines Textfeldes für ein Anzeigen der eingegebenen alphanumerischen Zeichen; und
Anzeigen einer per Bildlauf durchsehbare Liste von Regisseur- oder Schauspieler-Namen, wobei die Funktion zum Abgleichen von Anfangszeichen veranlasst, dass bei der Liste von Regisseur- oder Schauspieler-Namen ein automatischer Bildlauf zu Regisseur- oder Schauspieler-Namen in der Liste durchgeführt wird, die Anfangszeichen aufweisen, welche mit einer in dem Textfeld angezeigten Zeichenkette übereinstimmen.

35. Verfahren nach Anspruch 34, weiter beinhaltend:

Anzeigen eine Maske (60), die auf die für Regisseur- oder Schauspieler-Namen dienende Maske folgt, für ein optionales Auswählen einer Programmkategorie.

36. Verfahren nach Anspruch 34, wobei der Betrachter Zeichen durch Aktivieren von Steuereinrichtungen auf einer Fernsteuereinrichtung (4) eingibt, die virtuellen Steuereinrichtungen auf dem virtuellen alphanumerischen Tastenfeld entsprechen.

37. Verfahren nach Anspruch 27, wobei der Suchschritt umfasst, dass eine Maske (30, 60, 80) für ein optionales Auswählen einer Programmkategorie angezeigt wird.

38. Verfahren nach Anspruch 27, wobei der Suchschritt umfasst:

Anzeigen einer Maske (70) für ein Eingeben eines Schlüsselwortes, wobei der Schritt zum Anzeigen einer Maske umfasst, dass angezeigt wird:

ein virtuelles alphanumerisches Tastenfeld für ein Eingeben von alphanumerischen Zeichen, um das Schlüsselwort zu buchstabieren;
ein Textfeld zum Anzeigen der eingegebenen Zeichen; und
eine per Bildlauf durchsehbare Liste von Schlüsselwörtern, wobei die Funktion zum Abgleichen von Anfangszeichen veranlasst, dass bei der Liste von Schlüsselwörtern ein automatischer Bildlauf zu Schlüsselwörtern in der Liste durchgeführt wird, die Anfangszeichen aufweisen, welche mit einer in dem Textfeld angezeigten Zeichenkette übereinstimmen.

39. Verfahren nach Anspruch 38, wobei der Betrachter Zeichen durch Aktivieren von Steuereinrichtungen auf einer Fernsteuereinrichtung (4) eingibt, die virtuellen Steuereinrichtungen auf dem virtuellen alphanumerischen Tastenfeld entsprechen.

40. Verfahren nach Anspruch 27, wobei die indexierten Attribute beliebige beinhalten von:

Name des Schauspielers;
Name des Regisseurs;
Name des Moderators;
Name des Gaststars;
Choreograph;
Jahr der Veröffentlichung;
Kategorie; und
Sprache.

41. Verfahren nach Anspruch 27, wobei die Programmführer-Datenbank eine objektorientierte Datenbankanwendung aufweist, wobei die Datenbankanwendung zumindest beinhaltet:

ein "Serie"-Objekt; und
ein "Programm"-Objekt.

42. Verfahren nach Anspruch 41, wobei das "Serie"-Objekt ein "Titel"-Feld einer Serie beinhaltet.

43. Verfahren nach Anspruch 42, wobei die Programm-

führer-Datenbank weiter einen "Titel"-Index aufweist, wobei der "Titel"-Index aus dem "Titel"-Feld einer Serie aufgebaut ist.

44. Verfahren nach Anspruch 43, wobei der Suchschritt eine Suchmaschine zum Durchsuchen des "Titel"-Index beinhaltet.

45. Verfahren nach Anspruch 41, wobei das "Programm"-Objekt Felder beinhaltet für:

Titel;
Episodentitel;
Beschreibung;
Schauspieler;
Moderatoren;
Gaststars; und
Regisseure.

46. Verfahren nach Anspruch 45, wobei die Datenbank weiter einen "Schauspieler"-Index aufweist, wobei der "Schauspieler"-Index aus den Feldern "Schauspieler", "Moderatoren" und "Gaststars" aufgebaut ist.

47. Verfahren nach Anspruch 46, wobei die Datenbank weiter einen "Regisseur"-Index aufweist, wobei der "Regisseur"-Index aus Einträgen in dem "Regisseur"-Feld aufgebaut ist.

48. Verfahren nach Anspruch 47, wobei der Suchschritt eine Suchmaschine zum Durchsuchen der Indizes "Schauspieler" und "Regisseur" beinhaltet.

49. Verfahren nach Anspruch 45, wobei die Datenbank weiter einen "Titelwort"-Index aufweist, wobei der "Titelwort"-Index" aus Einträgen in den "Titel"-Feldern und den "Episodentitel"-Feldern aufgebaut ist.

50. Verfahren nach Anspruch 49, wobei die Datenbank weiter einen "Schlüsselwort"-Index aufweist, wobei der "Schlüsselwort"-Index aus Wörtern in den Feldern "Beschreibung", "Schauspieler", "Moderatoren" und "Gaststars" aufgebaut ist.

51. Verfahren nach Anspruch 50, wobei der Suchschritt eine Suchmaschine zum Durchsuchen des "Titelwort"-Index und des "Schlüsselwort"-Index beinhaltet.

**Revendications**

1. Système de recherche dans une base de données interactive de guides de programmes de télévision, ledit système comprenant :

un client (3), ledit client (3) se trouvant en communication périodique (6) avec un serveur (7), et ledit client (3) téléchargeant des informations sur le programme courant à partir dudit serveur (7),

une base de données de guides de programmes résidente sur ledit client (3), lesdites informations sur le programme étant importées dans ladite base de données,

un moyen, au niveau dudit client (3), permettant d'extraire du texte à partir de champs dans les informations de guides de programmes,

un moyen, au niveau dudit client (3), permettant de traiter le texte extrait afin de créer des clés, chaque clé créée étant associée à un identifiant de programme,

un moyen, au niveau dudit client (3), permettant de trier les clés créées,

un moyen, au niveau dudit client (3), permettant d'éliminer des clés redondantes à partir des clés créées afin de créer un ensemble de clés uniques de telle sorte que chaque clé unique soit appariée avec une liste d'identifiants de programmes correspondant à chaque occurrence de la clé unique dans les clés créées avant l'élimination des clés redondantes,

un moyen, au niveau dudit client (3), permettant de créer une pluralité d'index sur la base desdites informations de programmes contenant au moins certaines des clés uniques et des listes associées d'identifiants de programmes pour ladite base de données, chaque index dans la pluralité d'index étant créé pour une fonction de recherche spécifique,

une interface interactive de spectateur (1) permettant de prélever des programmes à enregistrer sur ledit client (3), affichés sur un moyen d'affichage en communication avec ledit client (3),

un moyen permettant à un spectateur d'interagir avec ladite interface de spectateur (1),

ladite interface de spectateur (1) incorporant une fonction de correspondance de préfixe qui affiche, dans une liste déroulante, des éléments de ladite base de données associés aux clés uniques qui présentent des préfixes qui correspondent aux entrées alphanumériques du spectateur et qui déroule automatiquement la liste à mesure que le spectateur saisit l'entrée alphanumérique, et

un moyen permettant de rechercher dans ladite base de données en fonction d'une fonction de recherche par la comparaison des clés uniques dans l'index sélectionné à une entrée alphanumérique du spectateur en fonction d'au moins l'un parmi :

    le titre du programme,
    des attributs de programmes indexés, et

    des mots-clés,

    un index étant sélectionné pour faire l'objet d'une recherche par le moyen de recherche sur la base de la sélection par le spectateur d'une fonction de recherche.

2. Système selon la revendication 1, ledit système étant un système interactif d'enregistrement vidéo fondé sur les réseaux.

3. Système selon la revendication 1, dans lequel ladite interface de spectateur (1) affiche un écran de recherche de base de données (40, 50, 70) possédant des éléments d'interface Web de navigation, en entrant des valeurs de recherche et en affichant des résultats de recherche.

4. Système selon la revendication 3, dans lequel ledit moyen permettant d'interagir avec ladite interface comprend une télécommande (4), ladite télécommande (4) communiquant avec ledit client (3) au moyen d'un signal de données (5)

5. Système selon la revendication 4, dans lequel ledit signal de données (5) est intégré dans un signal porteur.

6. Système selon la revendication 1, dans lequel ledit moyen de recherche dans ladite base de données comprend un écran (30, 60, 80) permettant de sélectionner en option une catégorie de programmes.

7. Système selon la revendication 1, dans lequel ledit moyen de recherche dans ladite base de données comprend en outre un écran (40) permettant d'entrer un titre de programme et d'afficher une liste de titres de programmes (42), ledit écran (40), permettant d'entrer un titre de programme et d'afficher une liste de titres de programmes (42), comprenant :

    un clavier virtuel alphanumérique (41) permettant de saisir des caractères alphanumériques afin d'épeler ledit titre de programme,
    une zone de texte (44) permettant d'afficher lesdits caractères alphanumériques saisis, et
    une liste déroulante de titres de programmes (42) dans laquelle ladite fonction de correspondance de préfixe provoque le défilement automatique de ladite liste de titres de programmes (42) sur des titres dans ladite liste (42) comportant des préfixes qui correspondent à une chaîne de caractères affichés dans ladite zone de texte (44).

8. Système selon la revendication 7, dans lequel le spectateur saisit des caractères alphanumériques en activant des commandes sur une télécommande (4), lesquelles correspondent à des commandes virtuelles sur ledit clavier virtuel alphanumérique.

9. Système selon la revendication 1, dans lequel ledit moyen de recherche dans ladite base de données comprend en outre :

un écran (50) permettant de chercher en fonction du nom d'un réalisateur ou d'un acteur, et ledit écran (50) de recherche en fonction du nom d'un réalisateur ou d'un acteur comprenant :

un clavier virtuel unique permettant de saisir des caractères alphanumériques afin d'épeler le nom d'un réalisateur ou d'un acteur,
une zone de texte permettant d'afficher lesdits caractères alphanumériques saisis, et
une liste déroulante de noms de réalisateurs ou d'acteurs dans laquelle ladite fonction de correspondance de préfixe provoque le défilement automatique de ladite liste des noms de réalisateurs ou d'acteurs dont les préfixes correspondent à une chaîne de caractères affichée dans ladite zone de texte.

10. Système selon la revendication 9, comprenant en outre :

un écran (60) suivant ledit écran des noms de réalisateurs ou d'acteurs (50) permettant de sélectionner en option une catégorie de programmes.

11. Système selon la revendication 9, dans lequel le spectateur saisit des caractères en activant des commandes sur une télécommande (4), lesquelles correspondent à des commandes virtuelles sur ledit clavier virtuel alphanumérique.

12. Système selon la revendication 1, dans lequel ledit moyen de recherche dans ladite base de données comprend un écran (30, 60, 80) permettant de sélectionner en option une catégorie de programmes.

13. Système selon la revendication 1, dans lequel ledit moyen de recherche dans ladite base de données comprend en outre un écran (70) permettant de saisir un mot-clé, ledit écran de saisie d'un mot-clé (70) comprenant :

un clavier virtuel alphanumérique permettant de saisir des caractères alphanumériques pour épeler ledit mot-clé,
une zone de texte permettant d'afficher lesdits caractères alphanumériques, et
une liste déroulante de mots-clés dans laquelle ladite fonction de correspondance de préfixe provoque le défilement automatique de ladite liste de mots-clés pour les mots-clés dans ladite liste dont les préfixes correspondent à une chaîne de caractères affichés dans ladite zone de texte.

14. Système selon la revendication 13, dans lequel le spectateur saisit des caractères en activant des commandes sur une télécommande (4), lesquelles correspondent à des commandes virtuelles sur ledit clavier virtuel alphanumérique.

15. Système selon la revendication 1, dans lequel lesdits attributs indexés incluent l'un quelconque parmi :

un nom d'acteur,
un nom de réalisateur,
un nom d'hôte,
un nom de vedette invitée,
un chorégraphe,
l'année de sortie,
la catégorie, et
la langue.

16. Système selon la revendication 1, dans lequel ladite base de données de guides de programmes comprend une application orientée objet de base de données, ladite application de base de données incluant au moins :

un objet « série », et
un objet « programme ».

17. Système selon la revendication 16, dans lequel ledit objet « série » comprend un champ « titre » de série.

18. Système selon la revendication 17, dans lequel ladite base de données de guides de programmes comprend en outre un index de « titre », ledit index de « titre » étant construit à partir d'entrées dans ledit champ de « titre » de série.

19. Système selon la revendication 18, dans lequel le moyen de recherche dans ladite base de données comprend un moteur de recherche permettant de chercher ledit index de « titre ».

20. Système selon la revendication 16, dans lequel ledit objet « programme » inclut des champs pour :

le titre,
le titre de l'épisode,
la description,
les acteurs,
les hôtes,
les vedettes invitées, et
les réalisateurs.

**21.** Système selon la revendication 20, dans lequel ladite base de données comprend en outre un index « acteur », ledit index « acteur » étant construit à partir d'entrées dans lesdits champs « acteurs », « hôtes » et « vedettes invitées ».

**22.** Système selon la revendication 21, dans lequel ladite base de données comprend en outre un index « réalisateur », ledit index « réalisateur » étant construit à partir d'entrées dans ledit champ « réalisateurs ».

**23.** Système selon la revendication 22, dans lequel ledit moyen de recherche dans ladite base de données comprend un moteur de recherche permettant de chercher lesdits index « acteur » et « réalisateur ».

**24.** Système selon la revendication 20, dans lequel ladite base de données comprend en outre un index « mot titre », ledit index « mot titre » étant construit à partir desdits champs « titre » et « titre d'épisode ».

**25.** Système selon la revendication 24, dans lequel ladite base de données comprend en outre un index « mot-clé », ledit index « mot-clé » étant construit à partir de mots dans ledit champ « description », ledit champ « acteurs », ledit champ « hôtes » et ledit champ « vedettes invitées ».

**26.** Système selon la revendication 25, dans lequel ledit moyen de recherche de ladite base de données comprend un moteur de recherche permettant de chercher ledit index « mot titre » et ledit index « mot-clé ».

**27.** Procédé de recherche dans une base de données interactive de guides de programmes de télévision, comprenant :

l'importation d'informations sur des programmes dans une base de données de guides de programmes résidente sur un client (3), ledit client (3) étant en communication périodique (6) avec un serveur (7), et ledit client (3) téléchargeant des informations sur le programme courant à partir dudit serveur (7), l'extraction, au niveau dudit client (3), d'un texte à partir de champs se trouvant dans les informations de guides de programmes, le traitement, au niveau dudit client (3), des textes extraits afin de créer des clés, chaque clé créée étant associée à un identifiant de programme, le tri, au niveau dudit client (3), des clés créées, l'élimination, au niveau dudit client (3), des clés redondantes à partir des clés créées pour créer un ensemble de clés uniques de telle sorte que chaque clé unique soit appariée avec une liste d'identifiants de programmes correspondant à chaque occurrence de la clé unique dans les clés créées avant l'élimination des clés redondantes, la création, au niveau dudit client (3), d'une pluralité d'index fondés sur lesdites informations de programmes contenant au moins certaines des clés uniques et des listes associées d'identifiants de programmes pour ladite base de données, chaque index dans la pluralité d'index étant créé pour une fonction de recherche spécifique, l'interaction avec un spectateur par l'intermédiaire d'une interface interactive de spectateur (1) afin de prélever des programmes à enregistrer sur ledit client (3), affichés sur un moyen d'affichage en communication avec ledit client (3), dans lequel ladite interface de spectateur (1) incorpore une fonction de correspondance de préfixe qui affiche, dans une liste déroulante, des éléments se trouvant dans ladite base de données qui sont associés à des clés uniques qui présentent des préfixes qui correspondent à la saisie alphanumérique du spectateur, et qui fait défiler automatiquement la liste à mesure que le spectateur saisit l'entrée alphanumérique, et la recherche dans ladite base de données en fonction d'une fonction de recherche en comparant les clés uniques dans un index sélectionné à des entrées alphanumériques du spectateur en fonction d'au moins l'un parmi :

le titre du programme, des attributs de programmes indexés, et des mots-clés,

un index étant sélectionné pour faire l'objet d'une recherche lors de l'étape de recherche sur la base de la sélection d'une fonction de recherche par le spectateur.

**28.** Procédé selon la revendication 27, dans lequel ledit procédé est incorporé dans un système interactif d'enregistrement vidéo fondé sur des réseaux.

**29.** Procédé selon la revendication 27, dans lequel ladite interface de spectateur (1) affiche un écran de recherche de base de données (40, 50, 70) comportant des éléments d'interface pour la navigation, la saisie de valeurs de recherche et l'affichage des résultats de recherche.

**30.** Procédé selon la revendication 29, dans lequel une télécommande (4) est utilisée pour réaliser une interface avec ladite interface interactive de spectateur (1), ladite télécommande (4) communiquant avec ledit client (3) au moyen d'un signal de données (5).

**31.** Procédé selon la revendication 30, dans lequel ledit signal de données (5) est intégré dans un signal porteur.

**32.** Procédé selon la revendication 27, dans lequel ladite étape de recherche comprend en outre :

la sélection en option d'une catégorie de programmes dans un premier écran (30), et la saisie d'un titre de programme dans un second écran (40), ledit second écran (40) comprenant :

un clavier virtuel alphanumérique (41) permettant de saisir des caractères alphanumériques afin d'épeler ledit titre de programme, une zone de texte (44) permettant d'afficher lesdits caractères alphanumériques saisis, et une liste déroulante de titres de programmes (42) dans laquelle ladite fonction de correspondance de préfixe provoque le défilement automatique de ladite liste de titres de programmes (42) sur des titres dans ladite liste (42) comportant des préfixes qui correspondent à une chaîne de caractères affichés dans ladite zone de texte (44).

**33.** Procédé selon la revendication 32, dans lequel le spectateur saisit des caractères en activant des commandes sur une télécommande (4), lesquelles correspondent à des commandes virtuelles sur ledit clavier virtuel alphanumérique.

**34.** Procédé selon la revendication 27, dans lequel ladite étape de recherche comprend en outre :

l'affichage d'un écran (50) de recherche en fonction du nom d'un réalisateur ou d'un acteur, et dans lequel ladite étape d'affichage d'un écran (50) de recherche en fonction du nom d'un réalisateur ou d'un acteur comprend en outre :

l'affichage d'un clavier virtuel alphanumérique permettant de saisir des caractères alphanumériques pour épeler un nom de réalisateur ou d'acteur, l'affichage d'une zone de texte permettant d'afficher lesdits caractères alphanumériques saisis, et l'affichage d'une liste déroulante de noms de réalisateurs ou d'acteurs, ladite fonction de correspondance de préfixe provoquant le défilement automatique de ladite liste de noms de réalisateurs ou d'acteurs sur des noms de réalisateurs ou d'acteurs dont les préfixes correspondent à une chaîne de caractères affichée dans ladite zone de texte.

**35.** Procédé selon la revendication 34, comprenant en outre :

l'affichage d'un écran (60) suivant ledit écran des noms de réalisateurs ou d'acteurs afin de sélectionner en option une catégorie de programmes.

**36.** Procédé selon la revendication 34, dans lequel le spectateur saisit des caractères en activant des commandes sur une télécommande (4), lesquelles correspondent à des commandes virtuelles sur ledit clavier virtuel alphanumérique.

**37.** Procédé selon la revendication 27, dans lequel ladite étape de recherche comprend l'affichage d'un écran (30, 60, 80) permettant de sélectionner en option une catégorie de programmes.

**38.** Procédé selon la revendication 27, dans lequel ladite étape de recherche comprend :

l'affichage d'un écran (70) permettant de saisir un mot-clé, ladite étape d'affichage d'écran comprenant l'affichage :

d'un clavier virtuel alphanumérique permettant de saisir des caractères alphanumériques pour épeler ledit mot-clé, d'une zone de texte permettant d'afficher lesdits caractères alphanumériques, et d'une liste déroulante de mots-clés dans laquelle ladite fonction de correspondance de préfixe provoque le défilement automatique de ladite liste de mots-clés pour les mots-clés dans ladite liste dont les préfixes correspondent à une chaîne de caractères affichés dans ladite zone de texte.

**39.** Procédé selon la revendication 38, dans lequel le spectateur saisit des caractères en activant des commandes sur une télécommande (4), lesquelles correspondent à des commandes virtuelles sur ledit clavier virtuel alphanumérique.

**40.** Procédé selon la revendication 27, dans lequel lesdits attributs indexés incluent l'un quelconque parmi :

un nom d'acteur, un nom de réalisateur, un nom d'hôte, un nom de vedette invitée, un chorégraphe, l'année de sortie, la catégorie, et

la langue.

**41.** Procédé selon la revendication 27, dans lequel ladite base de données de guides de programmes comprend une application orientée objet de base de données, ladite application de base de données incluant au moins :

> un objet « série », et
> un objet « programme ».

**42.** Procédé selon la revendication 41, dans lequel ledit objet « série » comprend un champ « titre » de série.

**43.** Procédé selon la revendication 42, dans lequel ladite base de données de guides de programmes comprend en outre un index de « titre », ledit index de « titre » étant construit à partir dudit champ de titre de « série ».

**44.** Procédé selon la revendication 43, dans lequel ladite étape de recherche comprend un moteur de recherche permettant de chercher ledit index de « titre ».

**45.** Procédé selon la revendication 41, dans lequel ledit objet « programme » inclut des champs pour :

> le titre,
> le titre de l'épisode,
> la description,
> les acteurs,
> les hôtes,
> les vedettes invitées, et
> les réalisateurs.

**46.** Procédé selon la revendication 45, dans lequel ladite base de données comprend en outre un index « acteur », ledit index « acteur » étant construit à partir d'entrées dans lesdits champs « acteurs », « hôtes » et « vedettes invitées ».

**47.** Procédé selon la revendication 46, dans lequel ladite base de données comprend en outre un index « réalisateur », ledit index « réalisateur » étant construit à partir d'entrées dans ledit champ « réalisateurs ».

**48.** Procédé selon la revendication 47, dans lequel ladite étape de recherche comprend un moteur de recherche permettant de chercher lesdits index « acteur » et « réalisateur ».

**49.** Procédé selon la revendication 45, dans lequel ladite base de données comprend en outre un index « mot titre », ledit index « mot titre » étant construit à partir d'entrées dans lesdits champs « titre » et « titre d'épisode ».

**50.** Procédé selon la revendication 49, dans lequel ladite base de données comprend en outre un index « mot-clé », ledit index « mot-clé » étant construit à partir desdits mots se trouvant dans ledit champ « description », ledit champ « acteurs », ledit champ « hôtes » et ledit champ « vedettes invitées ».

**51.** Procédé selon la revendication 50, dans lequel ladite étape de recherche comprend un moteur de recherche permettant de chercher ledit index « mot titre » et ledit index « mot-clé ».

FIG. 1

**Pick Programs to Record**

Search By Tittle

Search Using WishList

TiVo's Suggestions

Record by Time or Channel

Season Pass Manager

To Do List

*FIG. 2*

FIG. 3

FIG. 4

Choose Actor by Last Name

FORD, _

| CLR SP DEL |
| A B C D |
| E F G [H] |
| I J K L |
| M N O P |
| Q R S T |
| U V W X |
| Y Z 0 1 |
| 2 3 4 5 |
| 6 7 8 9 |

Ford, Bette
Ford, Catherine
Ford, Constance
Ford, Faith
Ford, Francis
Ford, Glenn
Ford, Harrison
Ford, Maria

~50

**FIG. 5**

Select Category

Actor FORD, HARRISON
You can narrow your search by specifying a category.

Don't specify a category
✓ Movies
Sports
Interests
Lifestyles
News

~60

**FIG. 6**

**Choose Keywords**

*Programs*

─ ────────────────────────────── 70

```
△   CLR SP DEL
◁   [A] B  C  D
▽   E   F  G  H
    I   J  K  L
    M   N  O  P
    Q   R  S  T
    U   V  W  X
    Y   Z  0  1
    2   3  4  5
    6   7  8  9
```

Press SELECT on
-the letters to spell keywords/titles
-SP to add a space
-DEL to delete a single letter
-CLR to delete all the keywords

Press PAUSE to add a quotation mark
Examples:
"Star Wars"
Bond Connery

**FIG. 7**

**Select Category**

*Programs*

Keywords: "THE WIZZARD OF OZ"
You can narrow your search by specifying a category.

△   Don't specify a category ──────────── 80

◁   ☑ Movies ▷

▽   Sports
    Interests
    Lifestyles
    News

    ▽

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6133909 A
- WO 9617473 A1
- WO 9748230 A1
- WO 9531069 A1
- WO 9930492 A1

### Non-patent literature cited in the description

- Information Retrieval: Data Structures and Algorithms. **STEVEN WARTIK et al.** Hashing algorithms. Prentice-Hall, 1992, 293-362